# EUROPEAN PATENT APPLICATION

(11) **EP 0 602 577 A1**
(43) Date of publication of application: **22.06.1994**
(21) Application number: 93120062.0
(22) Date of filing: 13.12.1993
(51) Int. Cl.: A01J 11/16, B01F 11/02

(54) **Homogenization device, particularly for milk and the like**

(30) Priority: 18.12.1992 IT MI922910
(71) Applicant: NISVA S.r.l., I-25040 Cividate Camuno (Brescia) (IT)
(72) Inventor: Zaglio, Enrico, I-25040 Cividate Camuno (Brescia) (IT)
(74) Representative: Modiano, Guido, Dr.-Ing.

(57) **Abstract**

The homogenization device particularly for milk and the like comprises ultrasound-generating means (1) suitable to generate ultrasounds in a cavity (4) of a body (5) having a fluid inlet port (6) and fluid outlet port (7), said generating means (1) being suitable to homogenize said fluid inside said cavity(4).

## Description

The present invention relates to a homogenization device particularly for milk and the like.

As is known, mechanical homogenizers, usually of the nozzle type, are commonly used to process milk; these homogenizers allow to obtain a homogenization of the milk that it sufficient for the characteristics of the finished product to be marketed.

However, for laboratory analyses, homogenization performed with purely mechanical devices, such as for example the above mentioned mechanical homogenizers, is particularly troublesome and brings about numerous problems during analysis, due both to the homogenization and to the homogenizer itself.

The homogenization required for laboratory measurements, such as measurements of percentages of fats, proteins and the like, is in fact extremely fine and high-level, in the sense that the size of the fat clots must be substantially uniform and as small as possible.

With mechanical homogenizers it is particularly complicated to achieve such fine homogenization. Mechanical homogenizers can furthermore entail many problems in laboratory instruments.

Since they usually have moving parts and wear problems, these parts are in fact the most subjected to malfunction and can generate noise, for example electromagnetic noise, with their actuation motors, which are usually electric.

An aim of the present invention is to eliminate or substantially reduce the drawbacks described above by providing a homogenization device particularly for milk and the like which allows to achieve an extremely high-level homogenization.

Another object of the present invention is to provide a device that eliminates all moving mechanical elements and the use of any electric motor for moving the mechanical parts.

Another object of the present invention is to provide a device which is highly reliable, relatively easy to manufacture and at competitive costs.

With these and other objects in view, there is provided, according to the present invention, a homogenization device particularly for milk and the like, characterized in that it comprises ultrasound-generating means suitable to generate ultrasounds in a cavity of a body having a fluid inlet port and a fluid outlet port, said generating means being suitable to homogenize said fluid inside said cavity.

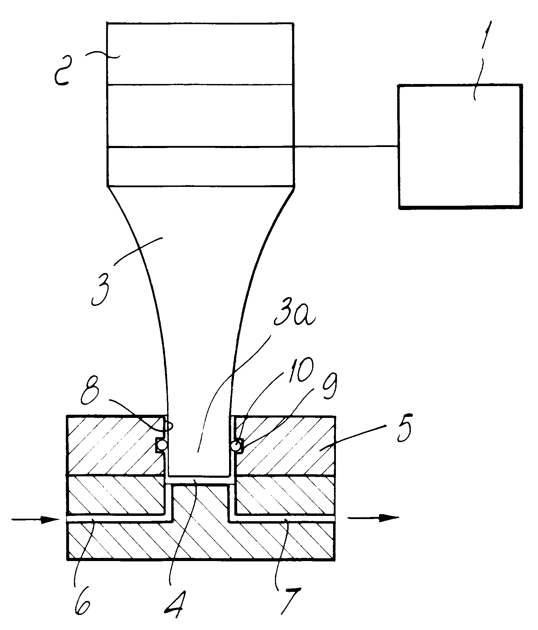

Further characteristics and advantages of the present invention will become apparent from the following detailed description of a preferred but not exclusive embodiment thereof, illustrated only by way of non-limitative example in the accompanying drawings, wherein the only figure is a diagram of the device according to the invention.

With reference to the above figure, a homogenization device particularly for milk and the like comprises ultrasound-generating means including an ultrasound generator 1 electrically connected to a transducer 2 to which a sonotrode 3 is fixed; an end 3a of said sonotrode 3 sealingly enters a cavity 4.

The sonotrode 3 generates ultrasounds within the cavity 4 of a body or cuvette 5 having a fluid inlet port 6 and a fluid outlet port 7. The generating means homogenize the fluid that flows in the cavity 4.

The cuvette 5, that delimits the cavity 4 connected to the outside by means of the fluid inlet port 6 and the fluid outlet port 7, has, at the cavity 4, an opening 8 through which the end 3a of the sonotrode 3 enters the cavity 4.

At least one annular recess 9 is provided in a median portion of the perimetric walls of the opening 8, said recess accommodating a respective sealing ring 10 which ensures the seal of the sonotrode 3 within the cavity 4.

The depth of the cavity 4 is much smaller than its width; its thickness is substantially equal to the width of the end 3a of the sonotrode 3 that enters said cavity.

Operation is as follows: once the generator 1 has been started, and once the sonotrode 3 generates ultrasounds in the cavity 4 by means of the transducer 2, a fluid to be homogenized, such as milk and the like, is introduced through the port 6 and is sprayed against the end 3a of the sonotrode 3. The fluid is processed in the cavity 4 and is expelled therefrom through the outlet port 7 for the subsequent inflow of fluid from the port 6. The cuvette 5 is of course absolutely reversible from a hydraulic point of view.

Practical tests have shown that the present invention achieves the intended aim and objects, constituting a valid alternative to laboratory homogenizers of the mechanical type.

Advantageously, the device according to the present invention has no moving mechanical parts, thus achieving absolute reliability and constant results in the course of time.

Conveniently, the device according to the present invention has no mechanical or electric parts the setup of which can compromise the integrity of the system.

Furthermore, advantageously, there are no elements subjected to intense hydrostatic pressures, as occurs for example in mechanical homogenizers.

The invention thus conceived is susceptible to numerous modifications and variations, all of which are within the scope of the inventive concept. All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Homogenization device particularly for milk and the like, characterized in that it comprises ultrasound-generating means (1) suitable to generate ultrasounds in a cavity (4) of a body (5) having a fluid inlet port (6) and a fluid outlet port (7), said generating means (1) being suitable to homogenize said fluid inside said cavity (4).

2. Device according to claim 1, characterized in that said ultrasound-generating means (1) comprise an ultrasound generator electrically connected to a transducer (2) to which a sonotrode (3) is fixed, an end of said sonotrode sealingly entering said cavity (4).

3. Device according to the preceding claims, characterized in that said body (5) forms said cavity (4), which is connected to the outside by means of said fluid inlet port (6) and said fluid outlet port (7), an opening (8) being formed in said body (5) at said cavity (4), said sonotrode (3) entering said cavity (4) through said opening (8).

4. Device according to the preceding claims, characterized in that at least one annular recess (9) for accommodating a respective sealing ring (10) is formed in a median portion of the perimetric walls of said opening (8), said sealing ring (10), or each sealing ring, being suitable to ensure the seal of said sonotrode (3) within said cavity.

5. Device according to one or more of the preceding claims, characterized in that the depth of said cavity (4) is much smaller than its width, its width being substantially equal to the width of said sonotrode (3) that enters said cavity (4).
